(19) Europäisches Patentamt
European Patent Office
Office européen des brevets

(11) EP 4 804 615 A1

(12) **EUROPEAN PATENT APPLICATION**
published in accordance with Art. 153(4) EPC

(43) Date of publication:
**09.09.2026 Bulletin 2026/37**

(21) Application number: **24886368.0**

(22) Date of filing: **01.11.2024**

(51) International Patent Classification (IPC):
***H04W 36/00*** (2009.01) ***H04W 36/08*** (2009.01)
***H04W 56/00*** (2009.01) ***H04W 72/23*** (2023.01)

(52) Cooperative Patent Classification (CPC):
**H04W 36/00; H04W 36/08; H04W 56/00; H04W 72/23**

(86) International application number:
**PCT/KR2024/017081**

(87) International publication number:
**WO 2025/095697 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.11.2023 US 202363547139 P**

(71) Applicant: **LG Electronics Inc.**
**Yeongdeungpo-gu**
**Seoul 07336 (KR)**

(72) Inventors:
- **GO, Seongwon**
  **Seoul 06772 (KR)**
- **KIM, Hyungtae**
  **Seoul 06772 (KR)**

(74) Representative: **Jung, Minkyu**
**Wuesthoff & Wuesthoff**
**Patentanwälte und Rechtsanwalt PartG mbB**
**Schweigerstraße 2**
**81541 München (DE)**

(54) **METHOD FOR CELL SWITCH AND APPARATUS THEREFOR**

(57) A method according to an embodiment of the present disclosure comprises receiving a L1/L2 Triggered Mobility (LTM) configuration, receiving a Cell Switch Command Medium Access Control-Control Element (MAC CE) related to a target cell among the candidate cells, and performing an LTM cell switch based on a Timing Advance (TA) for the target cell. Based on UE-based TA measurement being configured for the target cell, the TA is acquired by measurement. The measurement is performed based on a specific downlink reference signal (DL RS) among DL RSs related to the target cell.

【FIG. 4】

Start
Receive LTM configuration
S410
Receive Cell Switch Command MAC CE
S420
Perform LTM cell switch
S430
End



Processed by Luminess, 75001 PARIS (FR)

## Description

[TECHNICAL FIELD]

The present disclosure relates to a method and device for a cell switch.

[BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

In NR operations prior to Rel-17/18, RRM L3 measurement was utilized for handover, and handover operations were performed by the higher layer. To reduce latency during handover, Rel-17 standardized an operation of configuring a SSB of a neighbor cell to a UE and performing L1 beam reporting for L1 measurement of the neighbor cell.

In Rel-18, standardization was carried out on a method of performing TA acquisition of candidate cells for operation (e.g., cell switch) based on the L1/L2-triggered mobility procedure. Further, UE-based TA acquisition/UE-based TA measurement, in which a UE measures TA for a candidate cell, is being discussed. For example, the UE-based TA acquisition/UE-based TA measurement may be configured by RRC.

[DISCLOSURE]

[TECHNICAL PROBLEM]

An object of the present disclosure is to propose a method for a UE to perform a TA measurement when a UE-based TA measurement is configured by RRC. More specifically, the object of the present disclosure is to propose a method of performing a TA measurement by minimizing signaling.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[TECHNICAL SOLUTION]

A method according to an embodiment of the present disclosure comprises receiving a L1/L2 Triggered Mobility (LTM) configuration, receiving a Cell Switch Command Medium Access Control-Control Element (MAC CE) related to a target cell among the candidate cells, and performing an LTM cell switch based on a Timing Advance (TA) for the target cell. The LTM configuration includes a configuration for each of candidate cells.

Based on UE-based TA measurement being configured for the target cell, the TA is acquired by measurement.

The measurement is performed based on a specific downlink reference signal (DL RS) among DL RSs related to the target cell.

The method of claim 1, wherein the specific DL RS is a Synchronization Signal Block (SSB) based on an SSB index.

The SSB index may be a highest SSB index or a lowest SSB index among SSB indexes based on the configuration for the target cell.

The SSB index may be an SSB index related to the target cell among SSB indexes in a resource set based on an LTM CSI report configuration.

The SSB index may be an SSB index of an SSB having a measurement value greater than or equal to a threshold among measured SSBs.

The specific DL RS may be based on a Transmission Configuration Indicator (TCI) state.

The TCI state may be a TCI state with a highest ID or a TCI state with a lowest ID among TCI states for which an SSB related to the target cell is configured as a reference RS.

The TCI state may be a TCI state activated for LTM among TCI states for which an SSB related to the target cell is configured as a reference RS.

A time domain behavior related to the specific DL RS may be set to 'periodic'.

The TCI state may be a TCI state for which a DL RS having a measurement value greater than or equal to a threshold among measured DL RSs is configured as a reference RS.

The specific DL RS may be a reference RS related to Quasi Co-Location (QCL) type A among two reference RSs based on the TCI state.

Based on the TA for the target cell, a random access procedure for the LTM cell switch may be skipped.

The method may further comprise transmitting capability information.

The capability information may include information that indicates a maximum number of candidate cells for TA acquisition before receiving the Cell Switch Command MAC CE.

Based on the number of candidate cells for which the UE-based TA measurement is configured among the candidate cells being greater than the maximum number, TA measurement may be performed for one or more candidate cells.

The one or more candidate cells may include a candidate cell determined based on i) the maximum number and ii) an order of an ID related to a candidate cell, among the candidate cells for which the UE-based TA measurement is configured.

The one or more candidate cells may include i) a candidate cell for which a TCI state is activated and/or ii) a candidate cell for which beam reporting is configured, among the candidate cells for which the UE-based TA measurement is configured.

A user equipment according to another embodiment of the present disclosure includes one or more transceivers, one or more processors, and one or more memories connected to the one or more processors and storing instructions.

The instructions, based on being executed by the one or more processors, allow the user equipment to perform all steps according to any one of the methods.

An apparatus according to another embodiment of the present disclosure includes one or more memories and one or more processors connected to the one or more memories. The one or more memories store instructions based on being executed by the one or more processors, and the instructions allow the device to perform all steps according to any one of the methods.

A non-transitory computer readable medium according to another embodiment of the present disclosure stores instructions.

The instructions executable by one or more processors allow a user equipment to perform all steps of any one of the methods.

A method according to another embodiment of the present disclosure comprises transmitting a L1/L2 Triggered Mobility (LTM) configuration, and transmitting a Cell Switch Command Medium Access Control-Control Element (MAC CE) related to a target cell among the candidate cells. The LTM configuration includes a configuration for each of candidate cells.

Based on a Timing Advance (TA) for the target cell, an LTM cell switch is performed.

Based on UE-based TA measurement being configured for the target cell, the TA is acquired by measurement.

The measurement is performed based on a specific downlink reference signal (DL RS) among DL RSs related to the target cell.

A base station according to another embodiment of the present disclosure includes one or more transceivers, one or more processors, and one or more memories connected to the one or more processors and storing instructions.

The instructions, based on being executed by the one or more processors, allow the user equipment to perform all steps according to any one of the methods.

[ADVANTAGEOUS EFFECTS]

According to embodiments of the present disclosure, ambiguity about a target of measurement for UE-based TA acquisition in a procedure for LTM can be resolved. Specifically, when the UE-based TA measurement is configured in the procedure for LTM, the measurement for TA acquisition can be performed without separate signaling. Therefore, the procedure for LTM can be efficiently performed in terms of signaling overhead.

Effects that could be achieved with the present disclosure are not limited to those that have been described hereinabove merely by way of example, and other effects and advantages of the present disclosure will be more clearly understood from the following description by a person skilled in the art to which the present disclosure pertains.

[BRIEF DESCRIPTION OF THE DRAWINGS]

FIG. 1 illustrates MAC RAR according to an embodiment of the present disclosure.

FIG. 2 illustrates a timing advance command MAC CE according to an embodiment of the present disclosure.

FIG. 3 illustrates a procedure related to LTM to which a method according to an embodiment of the present disclosure is applicable.

FIG. 4 is a flow chart illustrating a method according to an embodiment of the present disclosure.

FIG. 5 is a flow chart illustrating a method according to another embodiment of the present disclosure.

FIG. 6 illustrates configuration of a first device and a second device according to an embodiment of the present disclosure.

[DETAILED DESCRIPTION]

Hereinafter, preferred embodiments of the disclosure are described in detail with reference to the accompanying drawings. The following detailed description taken in conjunction with the accompanying drawings is intended for describing embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

<TRP classification-related extension description>

For convenience of description, the present disclosure is applied to the proposed scheme by assuming cooperative transmission/reception between 2 TRPs, but is extensively applicable to an environment of multi TRPs of 3 or more and also extensively applicable to a multi-panel environment. Different TRPs may be perceived by the UE as different TCI states (related to different CORESET pool indices).

For example, receiving, by the UE, the data/DCI using the first TCI state related to the first CORESET pool index means that the data/DCI is received from TRP 1. For example, transmitting, by the UE, the data/DCI using the first TCI state related to the first CORESET pool index means that the data/DCI is transmitted to TRP 1.

For example, receiving, by the UE, the data/DCI using the second TCI state related to the second CORESET pool index means that the data/DCI is received from TRP 2. For example, transmitting, by the UE, the data/DCI using the second TCI state related to the second CORESET pool index means that the data/DCI is transmitted to TRP 2.

Timing Advance (TA) related procedure

Uplink frame number i for transmission from a user equipment (UE) shall start $T_{TA}$ before the start of the corresponding downlink frame at the UE.

Uplink timing (e.g., uplink frame) related to $T_{TA}$ may be defined as follows.

Uplink Timing

Uplink frame number *i* for transmission from the UE shall start $T_{\mathrm{TA}} = \left(N_{\mathrm{TA}} + N_{\mathrm{TA,offset}} + N_{\mathrm{TA,adj}}^{\mathrm{common}} + N_{\mathrm{TA,adj}}^{\mathrm{UE}}\right)T_{\mathrm{c}}$

before the start of the corresponding downlink frame at the UE where

- $N_{TA}$ and $N_{TA,offset}$ are given by clause 4.2 of [5, TS 38.213], except for msgA transmission on PUSCH where $N_{TA} = 0$ shall be used.

$N_{TA,adj}^{common}$ given by clause 4.2 of [5, TS 38.213] is derived from the higher-layer parameters TACommon, TACommonDrift, and TACommonDriftVariation if configured, otherwise $N_{TA,adj}^{common} = 0$ ; $N_{TA,adj}^{UE}$ given by clause 4.2 of [5, TS 38.213] is computed by the UE based on UE position and serving-satellite-ephemeris-related higher-layers parameters if configured, otherwise $N_{TA,adj}^{UE} = 0$ .

The $T_{TA}$ may be calculated/determined based on NTA and NTA,offset. NTA and NTA,offset may be configured/applied as follows.

$N_{TA}$: 1) configuring through a random access response (RAR) and 2) configuring through timing advance command (MAC-CE)
$N_{TA,offset}$: 1) configuring a specific value per serving cell and 2) applying a pre-defmed value based on duplex mode/FR suitably to the serving cell

A method of configuring/applying $N_{TA,offset}$ and $N_{TA}$ described above is described in detail below.

$N_{TA,offset}$

Case 1) Method of configuring a specific value per serving cell

For example, a UE may receive configuration information (e.g., ServingCellConfigCommon Information) including information on NTA,offset from a base station. The configuration information may be received based on RRC signaling. Table 1 below shows the configuration information.

【Table 1】

| – *ServingCellConfigCommon* |
|---|
| The IE *ServingCellConfigCommon* is used to configure cell specific parameters of a UE's serving cell. The IE contains parameters which a UE would typically acquire from SSB, MIB or SIBs when accessing the cell from IDLE. With this IE, the network provides this information in dedicated signalling when configuring a UE with a SCells or with an additional cell group (SCG). It also provides it for SpCells (MCG and SCG) upon reconfiguration with sync. |
| ***ServingCellConfigCommon* information element** |
| -- ASN1START<br>-- TAG-SERVINGCELLCONFIGCOMMON-START<br><br>ServingCellConfigCommon ::= SEQUENCE {<br>physCellId PhysCellId OPTIONAL, -- Cond HOAndServCellAdd,<br>downlinkConfigCommon DownlinkConfigCommon OPTIONAL, -- Cond HOAndServCellAdd<br>uplinkConfigCommon UplinkConfigCommon OPTIONAL, -- Need M<br>supplementaryUplinkConfig UplinkConfigCommon OPTIONAL, -- Need S |

```
  n-TimingAdvanceOffset              ENUMERATED { n0, n25600, n39936 }
OPTIONAL,   -- Need S
                                          (…)
}
-- TAG-SERVINGCELLCONFIGCOMMON-STOP
-- ASN1STOP
```

| ***n-TimingAdvanceOffset*** |
|---|
| The N_TA-Offset to be applied for all uplink transmissions on this serving cell. If the field is absent, the UE applies the value defined for the duplex mode and frequency range of this serving cell. See TS 38.133 [14], table 7.1.2-2. |

Case 2) Method of applying a pre-defined value based on duplex mode/FR suitably to serving cell

For example, the UE may apply a pre-defined value of $N_{TA,offset}$ based on duplex mode (TDD/FDD)/FR suitably to the serving cell. Table 2 below shows the value of $N_{TA,offset}$.

【Table 2】

**Table 7.1.2-2: The Value of $N_{\text{TA offset}}$**

| **Frequency range and band of cell used for uplink transmission** | $N_{\text{TA offset}}$ **(Unit: $T_C$)** |
|---|---|
| FR1 FDD or TDD band with neither E-UTRA–NR nor NB-IoT–NR coexistence case | 25600 (Note 1) |
| FR1 FDD band with E-UTRA–NR and/or NB-IoT–NR coexistence case | 0 (Note 1) |
| FR1 TDD band with E-UTRA–NR and/or NB-IoT–NR coexistence case | 39936 (Note 1) |
| FR2 | 13792 |
| [1] Note 1: The UE identifies $N_{\text{TA offset}}$ based on the information n-TimingAdvanceOffset as specified in TS 38.331 [2]. If UE is not provided with the information n-TimingAdvanceOffset, the default value of $N_{\text{TA offset}}$ is set as 25600 for FR1 band. In case of multiple UL carriers in the same TAG, UE expects that the same value of n-TimingAdvanceOffset is provided for all the UL carriers according to clause 4.2 in TS 38.213 [3] and the value 39936 of $N_{\text{TA offset}}$ can also be provided for a FDD serving cell.<br>[2] Note 2: Void | |

$N_{TA}$

Case 1) Method of configuring through a random access response (RAR)

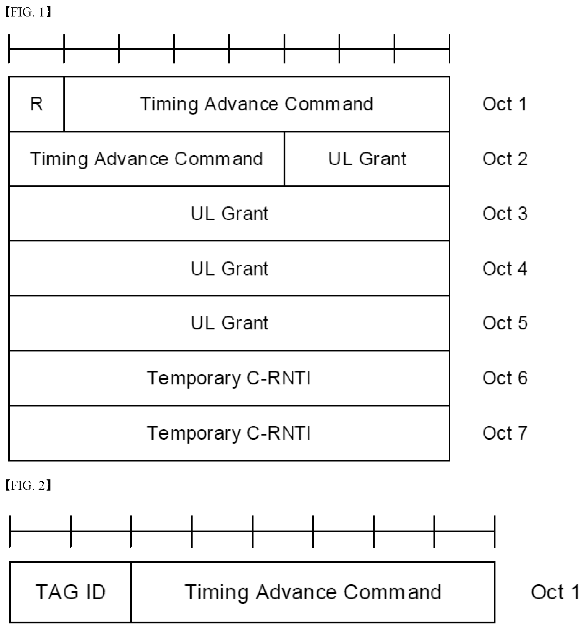

For example, in a random access procedure (e.g., 2-step RACH procedure or 4-step RACH procedure), a UE may receive an RAR from a base station. $N_{TA}$ may be determined/configured based on the RAR. Specifically, the RAR may include a timing advance command. The timing advance command indicates an index value (e.g., index value TA) related to timing adjustment. $N_{TA}$ may be determined based on the index value. The RAR may be based on MAC RAR. This is described below with reference to FIG. 1.

FIG. 1 illustrates MAC RAR according to an embodiment of the present disclosure.

Referring to FIG. 1, MAC RAR may include Reserved bit (R), Timing Advance Command, UL Grant, and Temporary C-RNTI. MAC payload of the MAC RAR is described in detail below.

6.2.3 MAC payload for Random Access Response

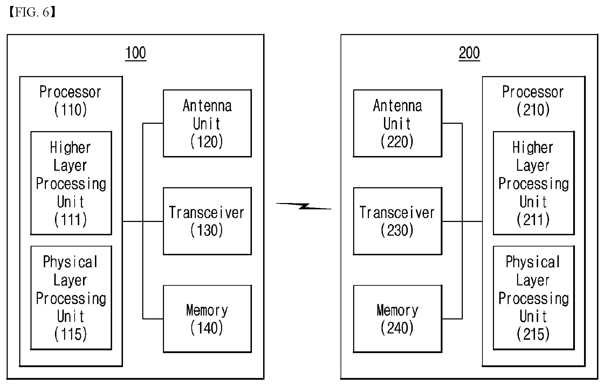

The MAC RAR is of fixed size as depicted in Figure 6.2.3-1, and consists of the following fields:

- R: Reserved bit, set to 0;
- TI: If two TAGs are configured for the Serving Cell in which the Random Access procedure is being performed, this field indicates one of the two TAGs to which the Timing Advance Command is applied. The field set to 0 indicates the first TAG ID and the field set to 1 indicates the second TAG ID. If two TAGs are not configured for the Serving Cell in which the Random Access procedure is being performed, the R bit is present instead;
- Timing Advance Command: The Timing Advance Command field indicates the index value TA used to control the amount of timing adjustment that the MAC entity has to apply in TS 38.213 [6]. The size of the Timing Advance Command field is 12 bits;
- UL Grant: The Uplink Grant field indicates the resources to be used on the uplink in TS 38.213 [6]. The size of the UL Grant field is 27 bits;
- Temporary C-RNTI: The Temporary C-RNTI field indicates the temporary identity that is used by the MAC entity during Random Access. The size of the Temporary C-RNTI field is 16 bits.

The MAC RAR is octet aligned.
Transmission timing adjustments based on the timing advance command are described below.

4.2 Transmission timing adjustments

A UE can be provided a value $N_{TA,offset}$ of a timing advance offset for a serving cell by n-TimingAdvanceOffset for the serving cell. If for a serving cell the UE is provided two coresetPoolIndex values 0 and 1 for first and second CORESETs, or is not provided coresetPoolIndex value for first CORESETs and is provided coresetPoolIndex value of 1 for second CORESETs, the UE can be provided first and second $N_{TA,offset}$ values by n-TimingAdvanceOffset and n-TimingAdvanceOffset2 for transmissions with TCI states associated with the first and second CORESETs, respectively. A UE can be provided a second $N_{TA,offset}$ value for transmissions with spatial domain filters corresponding to TCI states associated with physCellId different from physCellId for the serving cell in addition to a first $N_{TA,offset}$ value for transmissions with spatial domain filters corresponding to TCI states associated with physCellId for the serving cell. The first and second $N_{TA,offset}$ values correspond to first and second TAGs [11, TS 38.321] having an association indicated by tag-Id-ptr with first and second joint TCI states provided by dl-OrJointTCI-StateList or first and second UL TCI states provided by ul-TCI-State-List. If the UE is not provided n-TimingAdvanceOffset for a serving cell, the UE determines a default value $N_{TA,offset}$ of the timing advance offset for the serving cell as described in [10, TS 38.133].
If a UE is configured with two UL carriers for a serving cell, a same timing advance offset value $N_{TA,offset}$ applies to both carriers for transmissions on the serving cell that are associated with a same TAG. The UE does not expect to apply two $N_{TA,offset}$ values for transmissions on the SUL carrier.
Upon reception of a timing advance command for a TAG, the UE adjusts uplink timing for PUSCH/SRS/PUCCH transmission on all the serving cells in the TAG based on a value $N_{TA,offset}$ that the UE expects to be same for all the serving cells in the TAG and based on the received timing advance command where the uplink timing for PUSCH/SRS/PUCCH transmissions is the same for all the serving cells in the TAG.
For a band with synchronous contiguous intra-band EN-DC in a band combination with non-applicable maximum transmit timing difference requirements as described in Note 1 of Table 7.5.3-1 of [10, TS 38.133], if the UE indicates ul-TimingAlignmentEUTRA-NR as 'required' and uplink transmission timing based on timing adjustment indication for a TAG from MCG and a TAG from SCG are determined to be different by the UE, the UE adjusts the transmission timing for PUSCH/SRS/PUCCH transmission on all serving cells part of the band with the synchronous contiguous intra-band EN-DC based on timing adjustment indication for a TAG from a serving cell in MCG in the band. The UE is not expected to transmit a PUSCH/SRS/PUCCH in one CG when the PUSCH/SRS/PUCCH is overlapping in time, even partially, with random access preamble transmitted in another CG.
For a SCS of $2^{\mu} \cdot 15$ kHz, the timing advance command for a TAG indicates the change of the uplink timing relative to the current uplink timing for the TAG in multiples of $16 \cdot 64 \cdot T_c/2^{\mu}$. The start timing of the random access preamble is described in [4, TS 38.211].
A timing advance command [11, TS 38.321] in case of random access response or in an absolute timing advance command MAC CE or in a cell switch command, $T_A$, for a TAG indicates $N_{TA}$ values by index values of $T_A = 0, 1, 2, ..., 3846$, where an amount of the time alignment for the TAG with SCS of $2^{\mu} \cdot 15$ kHz is $N_{TA} = T_A \cdot 16 \cdot 64/2^{\mu}$. $N_{TA}$ is defined in [4, TS 38.211] and is relative to the SCS of the first uplink transmission from the UE after the reception of the random access response or absolute timing advance command MAC CE or the cell switch command.
In other cases, a timing advance command [11, TS 38.321], $T_A$, for a TAG indicates adjustment of a current $N_{TA}$

value, $N_{TA_old}$, to the new $N_{TA}$ value, $N_{TA_new}$, by index values of $T_A$ = 0, 1, 2,..., 63, where for a SCS of $2^{\mu} \cdot 15$ kHz, $N_{TA_new} = N_{TA_old} + (T_A - 31) \cdot 16 \cdot 64/2^{\mu}$.

If a UE has multiple active UL BWPs, as described in clause 12, in a same TAG, including UL BWPs in two UL carriers of a serving cell, the timing advance command value is relative to the largest SCS of the multiple active UL BWPs. The applicable $N_{TA_new}$ value for an UL BWP with lower SCS may be rounded to align with the timing advance granularity for the UL BWP with the lower SCS while satisfying the timing advance accuracy requirements in [10, TS 38.133].

Adjustment of an $N_{TA}$ value by a positive or a negative amount indicates advancing or delaying the uplink transmission timing for the TAG by a corresponding amount, respectively.

For a timing advance command received on uplink slot n and for a transmission other than a PUSCH scheduled by a RAR UL grant or a fallbackRAR UL grant as described in clause 8.2A or 8.3, or a PUCCH with HARQ-ACK information in response to a successRAR as described in clause 8.2A, the corresponding adjustment of the uplink transmission timing applies from the beginning of uplink slot $n + k + 1 + 2^{\mu} \cdot K_{offset}$ where $k = \lceil N_{slot}^{subframe,\mu} \cdot (N_{T,1} + N_{T,2} + N_{TA,max} + 0.5)/T_{sf} \rceil$, $N_{T,1}$ is a time duration in msec of $N_1$ symbols corresponding to a PDSCH processing time for UE processing capability 1 when additional PDSCH DM-RS is configured, $N_{T,2}$ is a time duration in msec of $N_2$ symbols corresponding to a PUSCH preparation time for UE processing capability 1 [6, TS 38.214], $N_{TA,max}$ is the maximum timing advance value in msec that can be provided by a TA command field of 12 bits, $N_{slot}^{subframe,\mu}$ is the number of slots per subframe, $T_{sf}$ is the subframe duration of 1 msec, and $K_{offset} = K_{cell,offset} - K_{UE,offset}$, where $K_{cell,offset}$ is provided by cellSpecificKoffset and $K_{UE,offset}$ is provided by a Differential Koffset MAC CE command [11, TS 38.321]; otherwise, if not respectively provided, $K_{cell,offset} = 0$ or $K_{UE,offset} = 0$. $N_1$ and $N_2$ are determined with respect to the minimum SCS among the SCSs of all configured UL BWPs for all uplink carriers in the TAG and of all configured DL BWPs for the corresponding downlink carriers. For $\mu = 0$, the UE assumes $N_{1,0} = 14$ [6, TS 38.214]. Slot n and $N_{slot}^{subframe,\mu}$ are determined with respect to the minimum SCS among the SCSs of all configured UL BWPs for all uplink carriers in the TAG. $N_{TA,max}$ is determined with respect to the minimum SCS among the SCSs of all configured UL BWPs for all uplink carriers in the TAG and for all configured initial UL BWPs provided by initialUplinkBWP. The uplink slot n is the last slot among uplink slot(s) overlapping with the slot(s) of PDSCH reception assuming $T_{TA} = 0$, where the PDSCH provides the timing advance command and $T_{TA}$ is defined in [4, TS 38.211].

If a UE changes an active UL BWP between a time of a timing advance command reception and a time of applying a corresponding adjustment for the uplink transmission timing, the UE determines the timing advance command value based on the SCS of the new active UL BWP. If the UE changes an active UL BWP after applying an adjustment for the uplink transmission timing, the UE assumes a same absolute timing advance command value before and after the active UL BWP change.

If the received downlink timing changes and is not compensated or is only partly compensated by the uplink timing adjustment without timing advance command as described in [10, TS 38.133], the UE changes $N_{TA}$ accordingly. If a UE operates with two TAGs on an active UL BWP of a serving cell, the UE expects that a difference between a first downlink timing associated with a first TAG and a second downlink timing associated with a second TAG is not larger than the CP length for the active UL BWP unless the UE indicates larger-thanCP-capability. If a UE indicates XYZ_capability, is provided SRS-autonomousTAupdate [10, TS 38.133], and transmits SRS based on a configuration by SRS-PosResourceSet in SRS-PosRRC-InactiveConfig-ValidityArea in RRC_INACTIVE state, the UE may autonomously update $N_{TA}$ at cell reselection; else, if the UE is not provided SRS-autonomousTAupdate, the UE maintains the $N_{TA}$ of a last serving cell prior to the release of a dedicated RRC connection [11, TS 38.321].

For operation with single TAG on a serving cell, if two adjacent slots overlap due to a TA command, the latter slot is reduced in duration relative to the former slot. The UE does not change $N_{TA}$ during an actual transmission time window for a PUSCH or a PUCCH transmission [6, TS 38.214]. If the UE is not provided enableSTx2PofMDCI and operates with two TAGs on a serving cell, the UE does not expect transmissions associated with different TAGs to overlap unless the UE indicates XYZ; if the UE indicates XYZ, the UE reduces in duration a latter transmission using a first TAG to avoid overlapping with a former transmission using a second TAG.

Case 2) Method of configuring through timing advance command (MAC-CE)

For example, NTA may be determined/configured based on MAC-CE. Specifically, NTA may be determined based on timing advance command MAC CE. The timing advance command MAC CE may include a timing advance command. Since the determination of NTA based on the timing advance command is the same as what was described in the Case 1, duplicate descriptions are omitted. The timing advance command MAC CE is described below with reference to FIG. 2.

FIG. 2 illustrates timing advance command MAC CE according to an embodiment of the present disclosure.

Referring to FIG. 2, timing advance command MAC CE may include a TAG ID and a timing advance command. A payload of the timing advance command MAC CE is described in detail below.

6.1.3.4 Timing Advance Command MAC CE

The Timing Advance Command MAC CE is identified by MAC subheader with LCID as specified in Table 6.2.1-1.
It has a fixed size and consists of a single octet defined as follows (Figure 6.1.3.4-1):

- TAG Identity (TAG ID): This field indicates the TAG Identity of the addressed TAG. The TAG containing the SpCell has the TAG Identity 0. The length of the field is 2 bits;
- Timing Advance Command: This field indicates the index value TA (0, 1, 2... 63) used to control the amount of timing adjustment that MAC entity has to apply (as specified in TS 38.213 [6]). The length of the field is 6 bits.

6.1.3.4a Absolute Timing Advance Command MAC CE

The Absolute Timing Advance Command MAC CE is identified by MAC subheader with eLCID as specified in Table 6.2.1-1b.
It has a fixed size and consists of two octets defined as follows (Figure 6.1.3.4a-1):

- Timing Advance Command: This field indicates the index value TA used to control the amount of timing adjustment that the MAC entity has to apply in TS 38.213 [6]. The size of the field is 12 bits;
- TI: If two TAGs are configured for SpCell, this field indicates one of the two TAGs to which the Timing Advance Command is applied. The field set to 0 indicates the first TAG ID and the field set to 1 indicates the second TAG ID. If two TAGs are not configured for SpCell, the R bit is present instead;
- R: Reserved bit, set to 0.

Timing Advance Group (TAG)

The timing advance group (TAG) refers to a group of serving cells that use the same timing advance value. Table 3 below shows definition of the TAG and configuration information related to the TAG.

【Table 3】

**Timing Advance Group**: A group of Serving Cells that is configured by RRC and that, for the cells with a UL configured, using the same timing reference cell and the same Timing Advance value. A Timing Advance Group containing the SpCell of a MAC entity is referred to as Primary Timing Advance Group (PTAG), whereas the term Secondary Timing Advance Group (STAG) refers to other TAGs.

*TAG-Config*

The IE *TAG-Config* is used to configure parameters for a time-alignment group.

***TAG-Config* information element**

```
  -- ASN1START
  -- TAG-TAG-CONFIG-START

TAG-Config ::=              SEQUENCE {
  tag-ToReleaseList            SEQUENCE (SIZE (1..maxNrofTAGs)) OF TAG-Id
OPTIONAL,   -- Need N
  tag-ToAddModList              SEQUENCE (SIZE (1..maxNrofTAGs)) OF TAG
OPTIONAL    -- Need N
}
```

```
TAG ::=                    SEQUENCE {
    tag-Id                     TAG-Id,
    timeAlignmentTimer             TimeAlignmentTimer,
    ...
}

TAG-Id ::=                 INTEGER (0..maxNrofTAGs-1)
```

| ***tag-Id*** Indicates the TAG of the SpCell or an SCell, see TS 38.321 [3]. Uniquely identifies the TAG within the scope of a Cell Group (i.e. MCG or SCG). |
|---|
| ***timeAlignmentTimer*** The timeAlignmentTimer for TAG with ID tag-Id, as specified in TS 38.321 [3]. |
| **maxNrofTAGs** INTEGER ::= 4 -- Maximum number of Timing Advance Groups |

The contents of the foregoing may be applied in combination with the methods proposed in this specification, which will be described later, or may be supplemented to clarify the technical characteristics of the methods proposed in this specification. The methods described below are only classified for convenience of explanation, and some components of one method may be substituted with some components of another method or may be applied in combination with each other.

According to 3GPP standards until NR Rel-17, handover operation by UE mobility is performed as follows. A UE reports (L3-based) RSRP measurement for candidate serving cell(s) that is a non-serving cell. A base station (BS) performs handover decision based on the report and then triggers handover to the UE. In this instance, the UE performs a detach on a serving cell and performs a RACH procedure for synchronization with a new cell. The UE can obtain, from a cell that intends to newly perform an attach, TA information on the cell through RAR reception.

In Rel-18 mobility enhancement, there is ongoing discussion about BS/UE operation to reduce delay (by skipping the RACH procedure) when the BS/UE acquires TA information on the candidate serving cell(s) before a handover command to perform handover (see Table 4 below).

In addition, while the existing handover is performed via L3 signaling, L1/L2-based handover is being considered to transmit, to a UE, beam/TA information to be used in a candidate serving cell using cell switch command MAC CE. As a method of acquiring TA for the candidate (serving) cell, a RACH-based approach and a RACH-less approach are being considered.

[Table 4]

| <RP-213565><br>1. To specify mechanism and procedures of L1/L2 based inter-cell mobility for mobility latency reduction:<br>◦ Configuration and maintenance for multiple candidate cells to allow fast application of configurations for candidate cells [RAN2, RAN3]<br>◦ Dynamic switch mechanism among candidate serving cells (including SpCell and SCell) for the potential applicable scenarios based on L1/L2 signalling [RAN2, RAN1]<br>◦ L1 enhancements for inter-cell beam management, including L1 measurement and reporting, and beam indication [RAN1, RAN2]<br>*- Note 1: Early RAN2 involvement is necessary, including the possibility of further clarifying the interaction between this bullet with the previous bullet*<br>◦ Timing Advance management [RAN1, RAN2]<br>CU-DU interface signaling to support L1/L2 mobility, if needed [RAN3] |
|---|

The following agreements were reached in Rel-18 mobility-TA management.

**Agreement**

Support TA acquisition of candidate cell(s) before cell switch command is received in L1/L2 based mobility.

FFS: whether this can be applied to candidate cell when it is deactivated SCell (if defined in RAN2)

**Agreement**

On mechanism to acquire TA of the candidate cells, the following solutions can be further studied:

RACH-based solutions (e.g., PDCCH ordered RACH, UE-triggered RACH, higher layer triggered RACH from NW other than L3 HO cmd)
RACH-less solutions (e.g., SRS based TA acquisition, Rx timing difference based, RACH-less mechanism as in LTE, UE based TA measurement (including UE based TA measurement with one TAC from serving cell)

**Agreement**

On mechanism to acquire TA of the candidate cell(s) in Rel-18 LTM, at least support PDCCH ordered RACH.

The PDCCH order is only triggered by source cell
FFS: the details including content of DCI, RACH resource configuration, RAR transmission mechanism, etc.

Note: any other RACH-based solutions are for discussion separately

**Agreement**

For PDCCH ordered RACH in LTM, at least the following enhancements are supported

Introduce indication of candidate cell and/or RO of candidate cell in DCI
configuration of RACH resource for candidate cell(s) is provided prior to the PDCCH order
FFS: whether/how to transmit RAR

**Agreement**

TA updating (i.e. re-acquisition of TA) for candidate cell can be triggered by NW.
same triggering mechanism reuse the initial TA acquisition, i.e., PDCCH order triggered RACH in a candidate cell

**Agreement**

For Rel-18 LTM, Random Access Preamble indices and indication of RACH occasions with the associated SSB indices are configured for each candidate cell.
Note: the detailed signalling is left to RAN2

**Agreement**

The PDCCH order from the source cell contains the indication of candidate cell.
The reserved bit(s) in DCI format 1_0 for PDCCH order can be used for indication of cell identity

**Agreement**

For PDCCH-order based RACH for TA measurement for candidate cells, legacy CBRA is not supported

**Agreement**

on whether UE should initiate re-transmit PRACH when reception of RAR is not configured/indicated, down select one from the following alternatives.

Alt 1: UE autonomous re-transmission of PRACH is not allowed (e.g., by setting the number of allowed PRACH transmission to the minimum value of PreambleTransMax=1)
Alt 2: UE autonomous Re-transmission of PRACH is allowed,
The number of PRACH transmission will be defined e.g. set the times of RACH transmission to the minimum value of PreambleTransMax

Agreement

Confirm the following Working Assumption, and sent LS to RAN4 to clarify the feasibility of supporting this mechanism

Working Assumption

From RAN 1 perspective, UE-based TA measurement (UE derives TA based on Rx timing difference between current serving cell and candidate cell as well as TA value for the current serving cell) is supported.

Corresponding UE capability is to be introduced to support UE-based TA measurement
For a UE reports support of this capability, configuration of UE-based TA measurement is supported
FFS: other impacts on RAN1 spec

Agreement

From RAN 1 perspective, without performing PDCCH-ordered RACH for candidate cell(s), RACH-less mechanism can be supported by indicating TA value of target cell as TA=0 or keeping the same value as source cell in cell switch command.
Note 1: this doesn't mean to preclude TA values other than 0 and the same value as source cell in cell switch command for PDCCH-ordered RACH when RAR is not configured for the PDCCH order.
Note 2: The feasibility and signalling can be further concluded by RAN2

**Agreement**

For PDCCH order based PRACH to candidate cell, the candidate cell SSB indicated in the PDCCH order serves as the path loss RS for PRACH Tx power determination.

**Agreement**

On the determination of the PRACH transmission power when reception of RAR is not configured, a [1-bit] field in PDCCH order explicitly indicating initial transmission or retransmission of PRACH is supported.

**Agreement**

On the determination of the PRACH transmission power when reception of RAR is not configured, a 1-bit field in PDCCH order explicitly indicating initial transmission or retransmission of PRACH, FFS

UE will increase the power with the value of power ramping configuration if it is indicated as re-transmission, unless the max allowed power is achieved
whether/how to reset the counter

**Agreement**

For the power control of PDCCH-ordered CFRA in LTM, the UE can maintain only one power ramping counter

Agreement

For the power control of PDCCH-ordered CFRA in LTM, power-ramping counter is reset at least when UE receives a PDCCH order indicating the initial transmission of PRACH

**Agreement**

For the power control of PDCCH-ordered CFRA in LTM,
When a UE receives a PDCCH order indicating a re-transmission of PRACH with the same associated SSB and same candidate cell as the previous PRACH, the counter is increased by 1.
In addition to case 1, power-ramping counter is reset in the following cases:
Case 2: The candidate cell indicated in the PDCCH order, indicating retransmission, is different from that indicated in the

last PDCCH order.

Note: the initial counter is 0 before receiving any PDCCH order.

**Agreement**

when a PDCCH order is sent for a candidate cell,
The bit size of N in DCI format 1_0 for cell indicator is determined by the number (e.g., C) of configured candidate cells with RACH configuration provided for early TA acquisition, the following alternative is supported:

$$\text{Alt 2: N}=\lceil \log_2(C+1) \rceil$$

The number of cells used to calculate the bit width is the number of candidate cells with RACH configuration provided for early TA acquisition + 1 (serving cell)

**Agreement**

The bit field codepoint '0' of cell indicator field in PDCCH order indicates PRACH for current serving cell, the rest bit field codepoints are mapped to candidate cells configured with EarlyUlSyncConfig-r18. That is, one-to-one mapping between bit field codepoint from 1 to C to candidate cell IDs in an ascending order.

The above contents are summarized as follows.

In the RACH-based approach, a PDCCH-ordered CFRA procedure may be utilized for TA acquisition for candidate cells. In RAN1, it was discussed whether or not RAR exists for the corresponding RACH transmission, so that it could be configured via RRC. In RAN2, it was concluded that the RAR is not required, so the UE does not receive the RAR for the corresponding RACH transmission. For RACH transmission to the candidate cells, PRACH configuration for the candidate cells may be pre-configured to the UE. The ordering DCI (i.e., DCI that triggers the PRACH transmission, the PDCCH order) may indicate an ID of the candidate cell or indicate RACH resources for the candidate cell. Through this indication, the RACH transmission for the candidate cell may be triggered. In this instance, timing of the RACH transmission for the candidate cell is ambiguous. This is described in detail below.

Unlike when RACH is transmitted from the serving cell based on DL reference timing of a reference cell (as shown in Table 5 below), the DL reference timing is ambiguous when transmitting (PDCCH ordered) RACH for the candidate cell. That is, there is ambiguity regarding when the UE should perform the RACH transmission for the candidate cell (Problem 1).

[Table 5]

| 7 Timing<br>7.1 UE transmit timing<br>7.1.1 Introduction<br>The UE shall have capability to follow the frame timing change of the reference cell in connected state or when transmiting PUSCH on CG resources for SDT in RRC_Inactive. The uplink frame transmission takes place $(N_{TA} + N_{TA\ offset}) \times T_c$ before the reception of the first detected path (in time) of the corresponding downlink frame from the reference cell. For serving cell(s) in pTAG, UE shall use the SpCell as the reference cell for deriving the UE transmit timing for cells in the pTAG. For serving cell(s) in sTAG, UE shall use any of the activated SCells as the reference cell for deriving the UE transmit timing for the cells in the sTAG. UE initial transmit timing accuracy and gradual timing adjustment requirements are defined in the following requirements. In the requirements of clause 7.1.2, the term reference cell on a carrier frequency subject to CCA is not available at the UE refers to when at least one SSB is configured by gNB, but the first two successive candidate SSB positions for the same SSB index within the discovery burst transmission window are not available during at least one discovery burst transmission window, at the UE due to DL CCA failures at gNB during the last 1280 |
|---|

Table 6 below summarizes the contents of the standardization meeting related to L1 measurement enhancement for transmitting beam information from the cell switch command MAC CE to the UE.

[Table 6]

| L1 measurement<br>- L1 intra-/inter-frequency measurement for candidate cell is supported |
|---|

(continued)

- SSB is supported
- For candidate cell measurement, L1-RSRP is supported
- For configurations, PCI is associated with SSB in LTM-CSI-SSB-ResourceSet
  - ■ The details are up to RAN2
    - ♦ It is provided under ServingCellConfig for the serving cell
    - ♦ Separately from ServingCellConfig for the serving cells and CellGroupConfig for the candidate cells

L1 measurement reporting
- For gNB scheduled L1 measurement report, report as UCI on PUCCH or PUSCH
- In a single report instance, report for serving cell and candidate cell(s) can be included
  - ■ Across L cells from configured cells, M beams for each of the L cells can be selected (max M/L values are based on UE capability)
    (i.e. MxL beams are reported in a single report instance)
- SSBRI among configured candidate cells is included for each L1-RSRP report
  - ■ Bit size of SSBRI is log2(K_SSB) where K_SSB is the number of configured SSBs in the corresponding resource set for the report

Beam indication
- Beam indication of candidate cell(s) for Rel-18 LTM is designed based on Rel-17 unified TCI framework
- Beam indication of target cell and TCI state activation for candidate cell is by indicating Rel-17 TCI state index
- For configuration for TCI states,
  - ■ QCL-type source RS in a QCL-Info of the TCI state is provided based on RS configuration for LTM
  - TCI activation for candidate cell before cell switch command, MAC-CE is used

Cell switch command (CSC)
- LTM mobility trigger information is conveyed in a MAC-CE
- On scenario 2 (beam indication together with CSC),
  - ■ Beam indication for target cell is conveyed in the MAC-CE used for LTM triggering for scenario 2
- At least the following information can be included in the CSC
  - ■ Information to identify the target cell
  - ■ TA related information
  - ■ 1 joint or pair of UL/DL unified TCI state index for target cell

  Active DL/UL BWPs for the target cell

Procedures related to Rel-18 LTM may be performed as follows.

L1/L2-Triggered Mobility Procedures

A UE can be indicated, by LTM-Config, candidate cells and SS/PBCH blocks per candidate cell for the UE to obtain synchronization and measure corresponding L1-RSRPs [10, TS 38.133]. A MAC CE command can activate TCI states, provided by LTM-Candidate-TCI-State-r18 or/and LTM-Candidate-TCI-UL-State-r18, associated with SS/PBCH blocks or TRS of corresponding candidate cells. The UE is provided configurations by LTM-CSI-ReportConfigToAddModList for reporting L1-RSRP measurements [6, TS 38.214] that include a number of candidate cells and a number of SS/PBCH blocks per candidate cell from the number of candidate cells.

If a UE is provided ueMeasuredTA, the UE estimates based on the UE implementation a timing advance to apply from a first transmission on a candidate cell that is after the reception of a cell switch command for the candidate cell [11, TS 38.321].A UE can be provided configurations, by EarlyUlSyncConfig, for PRACH transmission parameters for each of the candidate cells. The UE can be triggered a PRACH transmission on a candidate cell by a PDCCH order that the UE receives on a serving cell and includes an indication of the candidate cell for the PRACH transmission [4, TS 38.212]. If the serving cell and the candidate cell operate in a same frequency range and the UE would have transmissions that overlap in time, or when a gap between a first or last symbol of a PRACH transmission to the candidate cell is less than N symbols from a last or first symbol, respectively, of an UL transmission to the serving cell, where N is defined in Clause TBD, the UE perform following operations.

- UE drops the transmissions on the serving cell when the UE does not support transmissions that overlap in time or are

separated by less than the gap on the serving cell and the candidate cell.

- UE prioritizes power allocation to the PRACH transmission on the candidate cell in clause 7.5 when the UE supports transmissions that overlap in time or are separated by less than the gap, and a total UE transmit power in the frequency range would exceed $\hat{P}_{CMAX}$.

The UE transmits the PRACH on the candidate cell as described in Clause 8.1 with a power determined as described in Clause 7.4..

A UE can be provided by a MAC CE in a PDSCH reception on the serving cell [11, TS 38.321] a TCI-State and/or TCI-UL-State in LTM-dl-OrJointTCI-StateToAddModList and/or LTM-ul-TCI-ToAddModList indicating a unified TCI state [6, TS 38.214] for applicable receptions or transmissions on a candidate cell from the number of candidate cells. The UE applies the TCI-State and/or TCI-UL-State, if indicated by the MAC CE, from a first slot that is TBD after the last symbol of a PUCCH or PUSCH with HARQ-ACK information for the PDSCH providing the MAC CE, and $\mu$ is the SCS configuration for the TBD.

L1/L2-Triggered Mobility (LTM)

The LTM is described below with reference to FG. 3.

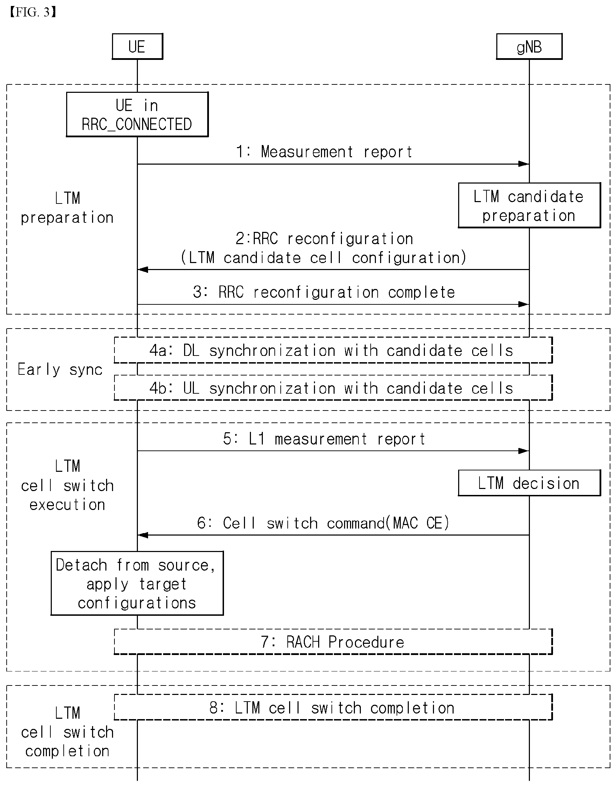

FIG. 3 illustrates a procedure related to LTM to which a method according to an embodiment of the present disclosure is applicable.

LTM is a procedure in which gNB receives an L1 measurement report from a UE, and based on the report, the gNB changes a serving cell of the UE by a cell switch command signaled via MAC CE. The cell switch command represents an LTM candidate configuration that the gNB has previously prepared and provided to the UE via RRC signaling. Then, the UE switches to a target configuration according to the cell switch command. The LTM procedure can be used to reduce mobility latency as described in Appendix G.

If it is configured in the network, TCI states of one or more cells different from the current serving cell may be activated. For example, a TCI state of an LTM candidate cell may be pre-activated before the corresponding cell becomes the serving cell. This can allow the UE to perform DL synchronization with the corresponding cell, and thus the cell can switch to one of the corresponding cells more quickly when the cell switch is triggered.

If it is configured in the network, an UL TA acquisition (referred to as 'early TA') procedure of one or more cells different from the current serving cell may be initiated. If a cell has the same NTA as the current serving cell or if NTA=0, the early TA acquisition procedure is not required. The network may request the UE to perform early TA acquisition of a candidate cell before the cell switch. The early TA acquisition procedure is triggered by PDCCH order as specified in clause 9.2.6 or is realized through UE-based TA measurement configured in RRC. In the former case, a gNB to which the candidate cell belongs calculates a TA value and transmits it to a gNB to which the serving cell belongs. The serving cell transmits the TA value in LTM cell switch command MAC CE when triggering the LTM cell switch. In the latter case, the UE performs a TA measurement for the candidate cell after configuring it in the RRC, but the exact time at which the UE performs the TA measurement depends on the UE implementation. The UE applies the TA value measured by the UE itself and performs the LTM without RACH upon receiving the cell switch command. The network may also transmit the TA value in the LTM cell switch command MAC CE without the early TA acquisition.

Based on the availability of a valid TA value, the UE performs a RACH-less LTM or RACH-based LTM cell switch. If the TA value is provided in the cell switch command, the UE applies the TA value as directed by the network. If UE-based TA measurement is configured but the TA value is not provided in the cell switch command, the UE directly applies the TA value if available. If the UE receives the cell switch command, it performs the RACH-less LTM cell switch. If the valid TA value is not available, the UE performs the RACH-based LTM cell switch.

The UE follows the PDCCH order, including requesting a random access procedure for the candidate cell, regardless of whether the UE is configured for the UE-based TA measurement for a specific candidate cell. This also applies to the candidate cells where the UE can derive the TA value itself. Additionally, the UE continues to follow the UE-based measurement configuration if configured in the network, regardless of whether the UE has already performed the random access procedure for the candidate cell.

For the RACH-less LTM, the UE accesses the target cell using a configured grant or a dynamic grant. The configured grant is provided in the LTM candidate configuration, and the UE selects a configured grant occasion related to the beam indicated in the cell switch command. When the LTM cell switch to the target cell initiates, the UE starts monitoring the PDCCH of the target cell for dynamic scheduling. If there is no valid PUCCH resource for the triggered SR before the RACH-less LTM procedure is completed, the UE does not trigger the random access procedure.

The following principles apply to LTM.

- The UE does not update its security key in LTM cell switch.
- Subsequent LTM is supported.

The LTM supports both intra-gNB-DU and intra-gNB-CU inter-gNB-DU mobility. The LTM supports both intra-frequency and inter-frequency mobility, including mobility to an inter-frequency cell that is not a current serving cell. The LTM supports only licensed spectrum. The following scenarios are supported.

- PCell change in non-CA scenario and non-DC scenario;
- PCell and SCell changes in CA scenario;
- Dual connectivity scenario, PCell and MCG SCell changes, and intra-SN PSCell and SCG SCell changes without MN involvement. LTM for simultaneous PCell and PSCell changes is not supported.

While the UE saves the LTM candidate configuration, the UE can also execute any L3 handover command sent by the network.

The cell switch command is transmitted from the MAC CE including information necessary to perform the LTM cell switch.

The overall procedure for LTM is illustrated in FIG. 3. Subsequent LTM is done by repeating the early synchronization, LTM cell switch execution, and LTM cell switch completion steps without releasing other LTM candidate configurations after each LTM cell switch completion. The standard procedure via radio interface is applied to SCG LTM. For more details on the SCG LTM, see TS 37.340[21].

Referring to FIG. 3, the procedure for LTM is as follows.

1. The UE sends a *MeasurementReport* message to the gNB. The gNB decides to configure LTM and initiates LTM preparation.

2. The gNB transmits an *RRCReconfiguration* message including LTM candidate configurations to the UE.

3. The UE stores the LTM candidate configurations and transmits an *RRCReconfigurationComplete* message to the gNB.

4a. The UE performs DL synchronization with candidate cells before receiving a cell switch command.

4b. When UE-based TA measurement is configured, the UE acquires the TA value of the candidate cell through measurement. The UE performs early TA acquisition with the candidate cells requested by the network before receiving the cell switch command as specified in clause 9.2.6. This is performed via CFRA triggered by a PDCCH order from a source cell, and then the UE sends preamble towards the indicated candidate cell. In order to minimize the data interruption of the source cell due to CFRA towards the candidate cells, the UE does not receive a random access response (RAR) from the network for the purpose of TA value acquisition, and the TA value of the candidate cell is indicated in the cell switch command. The UE does not maintain the TA timer for the candidate cell and relies on network implementation to guarantee the TA validity.

5. The UE performs L1 measurement on the configured candidate cells and transmits L1 measurement report to the gNB. The L1 measurement should be performed as long as the RRC reconfiguration (step 2) is applied.

6. The gNB decides to execute cell switch to a target cell and transmits a MAC CE triggering the cell switch by including a candidate configuration index of the target cell. The UE switches to the target cell and applies the configuration indicated by the candidate configuration index.

7. The UE performs the random access procedure towards the target cell if the UE does not have valid TA of the target cell as specified in clause 6.1.3.xy of TS 38.321[6].

8. The UE completes the LTM cell switch procedure by sending *RRCReconfigurationComplete* message to the target cell. If the UE has performed a RA procedure in step 7 the UE considers that LTM cell switch execution is successfully completed when the random access procedure is successfully completed. For RACH-less LTM, the UE considers that LTM cell switch execution is successfully completed when the UE determines that the network has successfully received its first UL data.

The steps 4 to 8 can be performed multiple times for subsequent LTM cell switch using the LTM candidate configurations provided in step 2.

Based on the background described above, the present disclosure describes a method for a UE to transmit a RACH toward a candidate serving cell in Rel-18 LTM (L1/L2-triggered mobility) for mobility enhancement, and proposes related UE operations. In particular, the present disclosure proposes a method of defining/configuring reference timing to determine which reference timing the UE should use when the UE transmits a RACH toward a candidate cell.

Below, the reference timing may refer to criteria for applying a TA when the UE transmits a specific uplink. The reference timing may be used interchangeably with expressions of a DL frame boundary, a DL reference timing, a reference point, etc. When the UE transmits a RACH based on the reference timing, the signal arrives at a base station later than the NW DL/UL frame boundary due to propagation delay, etc. The base station may calculate a required timing advance value and configure/indicate it to the UE. A non-serving cell that can be a target of a UE handover (i.e., cell switch) may be referred to as a candidate serving cell, a candidate cell, a target cell, a target candidate cell, etc.

Additionally, for Rel-18 LTM, the base station may perform configuration for one or more candidate cell information prior to a handover command. The configuration for the candidate cell information may include PCI, RACH configuration, etc. (e.g., RACH preamble, RACH occasion, RACH resource, or/and SSB index, etc. related to each candidate cell) for each candidate cell, which is a non-serving cell that can become a potential serving cell.

In the present disclosure, '/' may be interpreted as 'and', 'or', or 'and/or' depending on the context.

Embodiments for solving the above-described problem 1 are in detail below.

Proposal 1

A method of defining/configuring DL reference timing for a candidate cell for RACH-based TA acquisition of a UE for the candidate cell in Rel-18 LTM is described below.

Proposal 1-1

When a UE performs (PDCCH ordered CFRA) RACH transmission for a specific candidate cell, the UE may perform the RACH transmission based on DL reference timing (of a reference cell) defined/configured for a serving cell (receiving a PDCCH order).

Proposal 1-2

When a UE performs (PDCCH ordered CFRA) RACH transmission for a specific candidate cell, the UE may measure DL reference timing of a candidate cell based on a specific SSB (e.g., by LTM-Config) configured for the candidate cell (for the purpose of L1 measurement). The UE may perform the RACH transmission based on the DL reference timing.

For example, the specific SSB may be an SSB with the lowest/first ID or an SSB with the highest/last ID among SSBs configured in the candidate cell.

For example, the specific SSB may be based on the lowest/first and/or highest/last SSB index among SSBs configured in a CSI resource set for the purpose of UE beam measurement/report for the candidate cell. The CSI resource set may be configured based on LTM-CSI-ReportConfigToAddModList.

For example, the specific SSB may be the first configured SSB and/or the last configured SSB among SSBs configured in a CSI resource set for the purpose of UE beam measurement/report for the candidate cell. That is, the specific SSB may be determined based on the order configured/defined in the CSI resource set. The CSI resource set may be configured based on LTM-CSI-ReportConfigToAddModList.

More specifically, the specific SSB of the proposal 1-2 may be one of SSBs that the UE is measuring/tracking.

For example, the specific SSB may be an SSB with the lowest/highest ID among SSBs that the UE has recently performed an L3 measurement/report (for RRM) for a specific candidate cell.

For example, the specific SSB may be an SSB with the lowest/highest ID among SSBs where RSRP/RSRQ/RSSI based on the L3 measurement is equal to or greater than a certain threshold.

Proposal 1-3

When a UE performs (PDCCH ordered CFRA) RACH transmission for a specific candidate cell, the UE may measure DL reference timing of the candidate cell based on a DL RS related to a specific TCI state related to the candidate cell. The terminal can perform a RACH transmission based on the DL reference timing. For example, the DL RS may be a QCL reference RS of the TCI state or/and a SSB which is a top QCL source of the reference RS.

For example, the specific TCI state may be a TCI state with the lowest and/or highest ID among the TCI states where the SSB related to the specific candidate cell is configured as the QCL reference RS.

For example, the specific TCI state may be a TCI state activated for Rel-18 LTM operation among the TCI states where the SSB related to the specific candidate cell is configured as the QCL reference RS. As an additional example, the specific TCI state may be a TCI state with the lowest/highest ID among the TCI states activated for the Rel-18 LTM operation.

More restrictively, if time domain behavior characteristics of the DL RS related to the specific TCI state are semi-persistent or aperiodic, the TCI state may be excluded from DL reference timing measurements. This is because static/periodic RS reception of the UE is required for continuous reference timing measurements.

In the same manner as the proposal 1-2, the DL RS related to the specific TCI state may be one of the DL RSs that the UE is measuring/tracking. For example, the specific TCI state may be a TCI state in which the DL RS (e.g., SSB) on which the UE has recently performed an L3 measurement/report (for RRM) for the specific candidate cell is configured as the reference RS. For example, the specific TCI state may be a TCI state in which the DL RS (e.g., SSB) in which

RSRP/RSRQ/RSSI based on the L3 measurement is greater than or equal to a certain threshold is configured as the reference RS.

In the DL RS related to the specific TCI state, it may be assumed that two QCL reference RSs (e.g., QCL type A reference RS + QCL type D reference RS) are configured for the TCI state. In this case, it may be defined/configured (by a base station) which of the two RSs is used to measure the DL reference timing. For example, among the two RSs, the RS for QCL type A reference may be used for measuring the DL reference timing.

An embodiment of the proposal 1-3 may be represented as below.

For PRACH transmission toward candidate cell, the uplink transmit timing takes place $(N_{TA} + N_{TA\ offset}) \times T_c$ before the reception of the first detected path (in time) of the corresponding downlink frame of the reference signal associated with UL/DL/joint TCI state configured/activated for the candidate cell.

In the proposal 1-3, it may be assumed that when the UE performs (PDCCH ordered CFRA) RACH transmission for the specific candidate cell, there are no TCI state(s) activated for the candidate cell. In this case, other embodiments of the proposal 1-3 or other embodiments of the proposal 1 may be applied.

Proposal 1-4

When a UE performs (PDCCH ordered CFRA) RACH transmission for a specific candidate cell, the UE may measure DL reference timing of the candidate cell based on an SSB index (related to the candidate cell) indicated in a PDCCH order that triggers RACH for the candidate cell. The UE may perform RACH transmission based on the DL reference timing. The SSB index indicated in the PDCCH order (DCI) may be one of SSBs (e.g., maintained RS, periodically measured/reported RS, or known conditions for pathloss reference signal) being measured by the UE. The UE may expect the SSB index to be one of the above-described SSBs. This is because the static/periodic RS reception of the UE is required for continuous reference timing measurement.

In the proposal 1, measuring the DL reference timing of the candidate cell based on a specific DL RS means that the UE applies TA based on a reception time of the corresponding DL RS to transmit an uplink. That is, the uplink transmission based on the specific DL RS in the proposal 1 may mean "uplink transmit timing takes place $(N_{TA} + N_{TA\ offset}) \times T_c$ before the reception of the first detected path (in time) of the corresponding downlink frame of the DL RS".

In Rel-18 LTM, it was agreed that UE-based TA measurement is supported as a RACH-less approach for TA acquisition for candidate cells. Below, a new method for TA acquisition for candidate cells is proposed in relation to the RACH-based approach and the RACH-less approach.

Proposal 2 below may be utilized, in addition to TA acquisition for candidate cells in Rel-18 LTM, when multiple TAs are supported within a serving cell (e.g., Rel-18 MIMO two TA feature), or when TA acquisition for the multiple TAs or TA acquisition for a specific TAG in a UE CA situation is performed. Below, a target TRP may refer to i) a candidate cell in Rel-18 LTM, ii) a specific TRP/CORESET pool index/TAG in Rel-18 MIMO two TA, or iii) (a serving cell related to) a specific TAG in a UE CA situation. Below, a source TRP may be i) a serving cell in Rel-18 LTM, ii) a serving cell that serves as a standard for measuring TA of a target TRP, or iii) a reference cell.

Proposal 2

A method for TA acquisition for a specific target TRP of a base station is described below.

Proposal 2-1

A method may be considered in which a UE transmits a response based on DL reference timing of a specific target TRP, and a base station calculates a TA of the target TRP based on the response.

The UE may transmit a certain response message to DL RS of a target TRP, which is a reference, based on DL reference timing defined/configured for the target TRP. The response message may be configured/defined by the base station (via RRC) and may be at least one of PRACH/PUCCH/SRS. The base station may measure a Tx-Rx timing difference, which is a difference between Tx timing of transmitting the DL RS of the target TRP and Rx timing of receiving the response message. Considering/based on the timing difference being twice a propagation delay between the target TRP and the UE, the base station may measure/calculate a TA value for the target TRP of the UE. For example, the Tx-Rx timing difference/2 may be the TA value for the target TRP of the UE. The TA value for the target TRP may be transmitted to the UE by the base station based on RRC/MAC CE signaling, such as TA command MAC CE.

Proposal 2-2

A method may be considered in which a UE reports an Rx timing difference between a source TRP and a target TRP.

The UE measures DL reference timings of different DL RSs to report the Rx timing difference. Specifically, the UE measures a DL RS of the source TRP and a DL RS of the target TRP, which are configured (by the base station). Based on this, the UE may report the Rx timing difference to the base station. In addition, (to calculate the timing difference more accurately from the base station's perspective) the UE may report the doppler domain statistics (related to the source TRP/target TRP) to the base station.

The report may be configured/defined by the base station and may be transmitted via PUSCH/PUCCH, etc.

The base station may calculate/determine the TA based on the Rx timing difference as follows.

The base station has identified a slot boundary difference between the source TRP and the target TRP (in an asynchronous scenario). Also, the TA for the serving cell (source TRP) is already known. For the DL RS reception timing of the target TRP, the base station (NW) knows the slot boundary between the source TRP and the target TRP. The corresponding timing may be replaced by the source TRP to UE propagation delay (the TA value for the source TRP of the UE). The base station may measure the target TRP to UE propagation delay if there is only the Rx timing difference between the source TRP's DL RS and the target TRP's DL RS.

Considering/based on a time interval from the DL slot boundary of the target TRP to the DL RS reception timing of the UE's target TRP being the propagation delay between the target TRP and the UE, the base station may calculate the TA value for the target TRP. For example, the time interval from the DL slot boundary of the target TRP to the DL RS reception timing of the UE's target TRP may be the TA value for the UE's target TRP. The TA value for the target TRP may be transmitted to the UE by the base station based on RRC/MAC CE signaling, such as TA command MAC CE.

The embodiments of the proposal 1 and the proposal 2 may be applied to UE/base station operations in combination of one or more embodiments.

<UE based TA measurement method>

As shown in the agreement in Table 7 below, in Rel-18 LTM, UE-based TA measurement is supported as one of the RACH-less TA acquisition methods in addition to the RACH-based TA acquisition.

[Table 7]

| Agreement<br>Confirm the following Working Assumption, and sent LS to RAN4 to clarify the feasibility of supporting this mechanism<br>**Working Assumption**<br>From RAN 1 perspective, UE-based TA measurement (UE derives TA based on Rx timing difference between current serving cell and candidate cell as well as TA value for the current serving cell) is supported.<br>• Corresponding UE capability is to be introduced to support UE-based TA measurement<br>• For a UE reports support of this capability, configuration of UE-based TA measurement is supported<br>FFS: other impacts on RAN1 spec |
|---|

In the case of the UE-based TA measurement, the UE-based TA measurement may be enabled at the UE without a PDCCH order from the base station to transmit RACH to the candidate cell. Based on this, the UE measures TA for the candidate cell, and thus can perform L1/L2-based handover without a TA indication for the candidate cell during a cell switch command. Here, standardization discussions are underway regarding the following two problems.

Problem 2. Which signaling medium (via RRC or RRC + MAC CE) triggers the UE-based TA measurement? Additionally, can the UE-based TA measurement coexist with RACH-based TA acquisition?

Problem 3. What information should be transmitted to the UE when triggering the UE-based TA measurement?

Discussions/proposals regarding the problems 2 and 3 are as shown in Table 8 below.

[Table 8]

| - **Discussions regarding the above Problem 2**<br>Regarding whether two different TA acquisition methods can be supported or not,<br>▪ Alt 1: Priority rule is not needed. (DOCOMO, IDCC, LGE, Xiaomi, Ericsson, vivo, Lenovo, OPPO, Samsung(If UE based solution to be additionally active by MAC CE, only one solution to be activated/indicated)) |
|---|

(continued)

- UE is not expected to be configured with both PDCCH order RACH and UE based TA measurement for a candidate cell

▪ Alt 2: Priority rule is needed. (HW, ZTE, QC, Nokia, Samsung(if RRC based triggering of UE-based measurement is supported))

Support to configure UE with both PRACH based scheme and UE based scheme

**Proposal 2-4:** for the configuration/activation/triggering of UE-based TA measurement, down-select among the following alternatives in RAN1 #114-bis meeting.

▪ Alt 1: UE-based TA measurement is configured by RRC

▪ Alt 2: UE-based TA measurement is configured by RRC and activated/triggered by MAC CE for TCI state activation for candidate cells or cell switch command MAC CE

- UE-based TA measurement for indicated candidate is performed if MAC CE for TCI state activation for candidate cells is provided.
- If MAC CE for TCI state activation for candidate cells is not provided, UE-based TA measurement for indicated target cell is performed when cell switch command MAC CE is received.
- [Upon reception of cell switch command MAC CE, the UE calculates the final target cell TA and applies it for UL transmission.]

▪ Alt 3: UE-based TA measurement is activated/triggered by MAC CE for TCI state activation for candidate cells or cell switch command MAC CE

- UE-based TA measurement for indicated candidate is performed if MAC CE for TCI state activation for candidate cells is provided.
- If MAC CE for TCI state activation for candidate cells is not provided, UE-based TA measurement for indicated target cell is performed when cell switch command MAC CE is received.
- [Upon reception of cell switch command MAC CE, the UE calculates the final target cell TA and applies it for UL transmission.]

**- Discussions regarding the above Problem 3**

**Proposal 2-2:** For UE based TA acquisition, gNB should at least provide the following info for UE to derive the TA for candidate cell

• For each of measured serving cell and candidate cell

- Cell ID, measured SSB ID [and corresponding measured occasions]

DL Tx timing difference between the serving and candidate cells (for asynchronous scenarios)

In relation to the problem 2, it is discussed how a base station can configure/trigger UE-based TA measurement for a candidate cell for a specific UE. For example, the UE-based TA measurement may be configured via RRC. For example, the UE-based TA measurement may be triggered based on RRC+MAC CE. For example, the UE-based TA measurement may be triggered via only MAC CE.

In this case, as the most conservative approach, an operation for the base station to switch/enable/disable a RACH-based TA acquisition and a UE-based TA measurement via RRC may be considered. However, even in this case, additional signaling may be required to determine which candidate cell among RRC configured candidate cells the UE should perform the UE-based TA measurement on, and to determine which DL RS (e.g., SSB configured for a candidate cell) should be used to perform the UE-based TA measurement on a specific candidate cell. In this regard, information, such as target candidate cell ID, SSB ID, and DL Tx timing difference between the serving cell and candidate cells, for the UE-based TA measurement that the gNB shall provide to the UE is discussed as shown in the Proposal 2-2 of Table 8 above. The information may be provided to the UE via RRC or MAC CE signaling, but this may cause a problem that result

in RRC overhead or/and MAC CE signaling overhead.

Based on this background, the following proposes a method for a UE to perform a TA measurement for candidate cell(s) when a base station configures a UE-based TA measurement for the candidate cell(s) to the UE via RRC. Specifically, the following describes i) a rule/configuration regarding which candidate cell among RRC configured candidate cells the UE should perform the UE-based TA measurement on without additional signaling (or via minimal signaling), and ii) a rule/configuration that the UE should perform the UE-based TA measurement on a specific candidate cell based on which DL RS (e.g., SSB configured for a candidate cell).

In proposal 3 below, signaling that the UE-based TA measurement will be performed on which candidate cell(s) among RRC configured candidate cells may be transmitted/triggered to the UE via the RRC or/and MAC CE.

For example, the signaling may include i) an RRC enabler that allows the UE to perform the UE-based TA measurement for a specific candidate cell, or ii) an RRC configuration that allows the UE to configure an SSB related to a specific candidate cell in a CSI resource set for beam measurement usage and to report it using specific reportConfig.

For example, the signaling may be based on RRC signaling that configures a TCI state related to a specific candidate cell.

For example, the signaling may be MAC CE signaling that activates a TCI state for a specific candidate cell.

For example, the signaling may be a cell switch command MAC CE that commands a specific candidate cell to move.

Additionally, if a serving cell and a candidate cell are in a synchronous scenario, the UE may calculate the TA for the candidate cell by utilizing a time difference from DL reference timing of the serving cell to DL RS reception of the candidate cell. For example, the TA value for the candidate cell may be expressed as follows.

DL RS reception time of the candidate cell - DL reference timing of the serving cell (= DL reference timing of the candidate cell) = TA value for the candidate cell

On the other hand, if the serving cell and the candidate cell are in an asynchronous scenario, the UE may receive a difference between the DL reference timing of the serving cell and the DL reference timing of the candidate cell from the base station. The UE may correct the difference to calculate TA of the candidate cell in the same way as the above method. For example, the TA value for the candidate cell may be expressed as follows.

DL RS reception time of the candidate cell - DL reference timing of the serving cell + Difference between DL reference timing of the serving cell and DL reference timing of the candidate cell = TA value for the candidate cell

Proposal 3

A method for a UE to perform UE-based TA measurement for a specific DL RS of a specific candidate cell among RRC configured candidate cells by a base station is described below.

Proposal 3-1

When the UE performs UE-based TA measurement for a specific candidate cell, the UE may measure TA of the candidate cell based on a specific SSB (e.g., by LTM-Config) configured for the candidate cell (for the purpose of L1 measurement).

For example, the specific SSB may be an SSB with the lowest/first ID or an SSB with the highest/last ID among SSBs configured for the candidate cell.

For example, the specific SSB may be based on the lowest/first and/or highest/last SSB index among SSBs configured in a CSI resource set for the purpose of UE beam measurement/report for the candidate cell. The CSI resource set may be configured based on LTM-CSI-ReportConfigToAddModList.

For example, the specific SSB may be a first configured SSB and/or a last configured SSB among the SSBs configured in the CSI resource set for the purpose of UE beam measurement/report for the candidate cell. That is, the specific SSB may be determined based on the sequence number configured/defined in the CSI resource set. The CSI resource set may be configured based on LTM-CSI-ReportConfigToAddModList.

More specifically, the specific SSB in the proposal 3-1 may be one of SSBs that the UE is measuring/tracking.

For example, the specific SSB may be an SSB with the lowest/highest ID among SSBs that the UE has recently performed an L3 measurement/report (for RRM) for a specific candidate cell.

For example, the specific SSB may be an SSB with the lowest/highest ID among SSBs where RSRP/RSRQ/RSSI based on the L3 measurement is equal to or greater than a certain threshold.

Proposal 3-2

When the UE performs UE-based TA measurement for a specific candidate cell, the UE may measure TA of the candidate cell based on a DL RS related to a specific TCI state related to the candidate cell. For example, the DL RS may be

a QCL reference RS of the TCI state or/and a SSB which is a top QCL source of the reference RS.

For example, the specific TCI state may be a TCI state with the lowest and/or highest ID among the TCI states where the SSB related to the specific candidate cell is configured as the QCL reference RS.

For example, the specific TCI state may be a TCI state activated for Rel-18 LTM operation among the TCI states where the SSB related to the specific candidate cell is configured as the QCL reference RS. As an additional example, the specific TCI state may be a TCI state with the lowest/highest ID among the TCI states activated for the Rel-18 LTM operation.

More restrictively, if time domain behavior characteristics of the DL RS related to the specific TCI state are semi-persistent or aperiodic, the TCI state may be excluded from DL reference timing measurements. This is because static/periodic RS reception of the UE is required for continuous TA measurements.

In the same manner as the proposal 3-1, the DL RS related to the specific TCI state may be one of the DL RSs that the UE is measuring/tracking. For example, the specific TCI state may be a TCI state in which the DL RS (e.g., SSB) on which the UE has recently performed an L3 measurement/report (for RRM) for the specific candidate cell is configured as the reference RS. For example, the specific TCI state may be a TCI state in which the DL RS (e.g., SSB) in which RSRP/RSRQ/RSSI based on the L3 measurement is greater than or equal to a certain threshold is configured as the reference RS.

In the DL RS related to the specific TCI state, it may be assumed that two QCL reference RSs (e.g., QCL type A reference RS + QCL type D reference RS) are configured for the TCI state. In this case, it may be defined/configured (by a base station) which of the two RSs is used to measure the TA. For example, among the two RSs, the RS for QCL type A reference may be used for measuring the TA.

In the proposal 3, when the TA measurement of the UE for the specific candidate cell is triggered (by the RRC/MAC CE), it may be agreed/specified/defined between the base station and the UE that the corresponding UE-based measured TA is valid after a certain time gap from a triggering time. The time gap may be defined as X ms or N slots, etc., where X and N are natural numbers greater than or equal to 0. The reason for configuring the time gap and the resulting effects are as follows.

The time gap is intended to consider the time required for the TA calculation/computation after the DL RS measurement of the candidate cell (which may also include the time to wait for the timing of the DL RS transmission) that the UE shall measure after the triggering for the UE-based TA measurement. The TA value for the candidate cell that is determined to be perfectly valid through the time gap may be utilized. Specifically, the base station may configure/activate/indicate UL transmission to the UE by utilizing the TA value for the candidate cell that is determined to be valid based on the time gap.

An additional embodiment of the proposal 3 may consider the following method.

In the UE-based TA measurement, the UE reports the number of TAs (number of candidate cells) that can be maintained for candidate cells ('component 2: Maximum number of candidate cells that the UE maintains the TA for' in Table 9 below). In this instance, a method of performing the UE-based TA measurement on specific candidate cell(s) among the configured candidate cells based on the reported number of TAs (number of candidate cells) may be considered. This is described below in detail.

If the number of configured candidate cells is greater than the value reported by the UE, there is UE ambiguity in which the UE shall measure the TA for which candidate cell. The following example may be applied.

According to an embodiment, it may be assumed that the reported value is N, where N={1,2,3,4,5,6,7,8}. For example, the UE may perform the UE-based TA measurement on N candidate cell(s) in ascending order, starting from the candidate cell with the lowest cell ID among the configured candidate cells. For example, the UE may perform the UE-based TA measurement on N candidate cell(s) in descending order, starting from the candidate cell with the highest cell ID among the configured candidate cells. Through this operation, the UE ambiguity can be resolved when the number of candidate cells is greater than the reported value.

According to an embodiment, the UE may perform the UE-based TA measurement only on i) candidate cell(s) in which the TCI state is activated or/and ii) candidate cell(s) in which beam reporting is configured, among the configured candidate cells. The candidate cell in which the beam reporting is configured may refer to a candidate cell in which SSB of the candidate cell is configured for the beam measurement/reporting. Through this operation, the base station may restrict so that the UE performs the UE-based TA measurement on the candidate cell with the reported value or lower.

[Table 9]

| | | | |
|---|---|---|---|
| UE-based TA measurement | 1. Support of UE-based TA measurement<br>2. Maximum number of candidate cells that the UE maintains the TA for | Component 2 candidate values: {1,2,3,4,5,6,7,8} | Optional with capability signalling |

The embodiments of the proposal 1 to the proposal 3 may be applied to UE/base station operations in combination of one or more embodiments.

The following describes a signaling procedure related to the embodiments described above.

An example of a UE (or base station) operation based on at least one of the embodiments described above (e.g., at least one of the proposal 1 to the proposal 3) is as follows.

1) The UE (base station) receives (transmits) configuration information for a candidate cell.
The configuration information for the candidate cell may include information based on at least one of the proposal 1 to the proposal 3.
2) The UE (base station) receives (transmits) a message that configures/indicates RACH transmission for the candidate cell.
The message may be a PDCCH (DCI) that triggers/orders CFRA-based RACH.
3) The UE (base station) transmits (receives) the RACH based on the message.
DL reference timing related to the candidate cell for RACH transmission may be based on at least one of the proposal 1 to the proposal 3.
4) The UE (base station) receives (transmits) a cell switch command MAC CE. Based on the cell switch command MAC CE, a switch operation to a specific candidate cell may be performed.

The UE/base station operation is merely an example, and each operation (or step) is not necessarily required. Based on the UE/base station implementation method, operations related to the UE-based TA measurement for the candidate cell of the UE according to the above-described embodiments may be omitted or added. For example, the operations of the 2) and 4) may be skipped in the UE-based TA measurement method.

From an implementation perspective, operations of the UE/base station according to the above-described embodiments (e.g., operations based on at least one of the proposal 1 to the proposal 3) can be processed by a device (e.g., processors 100 and 200 in FIG. 6) of FIG. 6 described below.

Further, the operations of the UE/base station according to the above-described embodiments (e.g., operations based on at least one of the proposal 1 to the proposal 3) can be stored in a memory (e.g., memories 140 and 240 of FIG. 6) in the form of commands/programs (e.g., instructions, executable codes) for running at least one processor (e.g., processors 110 and 210 of FIG. 6).

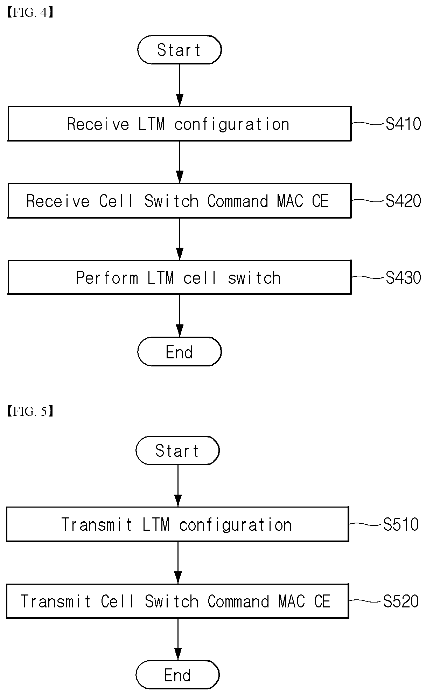

Below, the above-described embodiments are described in detail from a UE and a base station operation perspective with reference to FIGS. 4 and 5. Methods described below are merely distinguished for convenience of explanation. Thus, it is obvious that partial configuration of any method can be substituted or combined with partial configuration of another method.

FIG. 4 is a flow chart illustrating a method according to an embodiment of the present disclosure.

Referring to FIG. 4, a method according to an embodiment of the present disclosure comprises a step S410 of receiving a LTM configuration, a step S420 of receiving a cell switch command MAC CE, and a step S430 of performing an LTM cell switch.

In the step S410, a UE receives a L1/L2 Triggered Mobility (LTM) configuration (e.g., LTM-config) from a base station. The LTM configuration includes a configuration (e.g., LTM-Candidate) for each of candidate cells.

In the step S420, the UE receives a cell switch command Medium Access Control-Control Element (MAC CE) related to a target cell among the candidate cells from the base station.

For example, the cell switch command MAC CE includes a target configuration ID. The target configuration ID indicates an index of a candidate target configuration to be applied for a cell switch. The target configuration ID may correspond to ltm-CandidateId minus 1. ltm-CandidateId is used to identify the configuration of each candidate cell. The target cell may be a candidate cell, among the candidate cells, that corresponds to a configuration indicated by the target configuration ID.

In the step S430, the UE performs an LTM cell switch based on a timing advance (TA) for the target cell.

For example, based on the cell switch command MAC CE including a timing advance command, a random access procedure for the LTM cell switch may be skipped.

For example, the LTM cell switch may be performed based on the procedure for L1/L2 Triggered Mobility (LTM) described above. In the procedure for LTM, the base station may refer to gNB (e.g., gNB central unit (CU)) + one or more gNB-distributed unit (DU)). The cell switch based on the procedure for LTM may include i) a switch (Intra-gNB-DU LTM) from a source cell to a target cell within the gNB-DU, and ii) a switch (Iner-gNB-DU LTM) from a source cell (gNB-DU) to a target cell (other gNB-DU) within the gNB-CU.

The TA for the target cell may be acquired based on a UE measurement. Embodiments of the proposal 3 related to this are described in detail.

According to an embodiment, based on a UE-based TA measurement being configured for the target cell, the TA may be acquired by measurement. For example, the UE based TA measurement may be configured based on RRC

signaling. The present embodiment may be based on the proposal 3. The measurement may be performed based on a specific downlink reference signal (DL RS) among DL RSs related to the target cell.

According to an embodiment, the specific DL RS may be a synchronization signal block (SSB) based on an SSB index. The present embodiment may be based on the proposal 3-1.

For example, the SSB index may be a highest SSB index or a lowest SSB index among SSB indexes based on the configuration (e.g., LTM-Candidate) for the target cell.

For example, the SSB index may be an SSB index related to the target cell among SSB indexes in a resource set (e.g., LTM-CSI-SSB-ResourceSet) based on an LTM CSI report configuration. Specifically, the resource set (e.g., LTM-CSI-SSB-ResourceSet) may include a candidate ID list (e.g., ltm-CandidateIdList) and an SSB index list (e.g., ltm-CSI-SSB-ResourceList). A candidate cell which is an nth entry (where n=1, 2, ...) of the candidate ID list may be associated with an SSB index which is an nth entry (where n=1, 2, ...) of the SSB index list.

For example, the SSB index may be an SSB index of an SSB having a measurement value greater than or equal to a threshold among measured SSBs. As an additional example, the SSB index may be a highest SSB index or a lowest SSB index among the SSBs having the measurement value greater than or equal to the threshold. The measurement value may be based on at least one of Reference Signal Received Power (RSRP), Reference Signal Received Quality (RSRQ), and/or Received Signal Strength Indicator (RSSI).

According to an embodiment, the specific DL RS may be based on a Transmission Configuration Indication (TCI) state. The present embodiment may be based on the proposal 3-2.

For example, the TCI state may be a TCI state with a highest ID or a TCI state with a lowest ID among TCI states for which an SSB related to the target cell is configured as a reference RS.

For example, the TCI state may be a TCI state activated for LTM among TCI states for which an SSB related to the target cell is configured as a reference RS. Specifically, the TCI state activated for LTM may be a TCI state activated for early downlink (DL) synchronization before reception of the cell switch MAC CE.

For example, a time domain behavior related to the specific DL RS may be set to 'periodic'. Since static/periodic RS reception of the UE is required for continuous TA measurement, the DL RS set to semi-persistent/aperiodic may be excluded from the TA measurement.

For example, the TCI state may be a TCI state for which a DL RS with the measurement value greater than or equal to the threshold among the measured DL RSs is configured as a reference RS. As an additional example, the TCI state may be a TCI state with a highest ID or a TCI state with a lowest ID among TCI states for which the DL RS with the measurement value greater than or equal to the threshold is configured as a reference RS.

For example, the specific DL RS may be a reference RS related to Quasi Co-Location (QCL) type A among two reference RSs based on the TCI state.

According to an embodiment, the UE may perform a RACH-less LTM cell switch or a RACH based LTM cell switch based on availability of a valid TA.

For example, based on the TA for the target cell, a random access procedure for the LTM cell switch may be skipped. More specifically, based on that the UE has a successfully measured timing advance (TA) for the target cell, the random access procedure for the LTM cell switch may be skipped.

For example, based on there being no valid TA for the target cell, the UE may perform a RACH based LTM cell switch.

According to an embodiment, the method may further comprise transmitting capability information. Specifically, the UE transmits capability information to the base station. The capability information may include information (e.g., rach-EarlyTA-Measurement-r18) that indicates a maximum number of candidate cells for TA acquisition before receiving the cell switch command MAC CE. The present embodiment may be based on the additional embodiment of the proposal 3.

Specifically, based on the number of candidate cells for which the UE-based TA measurement is configured among the candidate cells being greater than the maximum number of candidate cells, the TA measurement may be performed for one or more candidate cells.

For example, the one or more candidate cells may include a candidate cell determined based on i) the maximum number of candidate cells and ii) an order of an ID related to a candidate cell (e.g., ascending order or descending order), among the candidate cells for which the UE-based TA measurement is configured.

For example, the one or more candidate cells may include i) a candidate cell for which a TCI state is activated and/or ii) a candidate cell for which beam reporting is configured, among the candidate cells for which the UE-based TA measurement is configured.

The operations based on the steps S410 to S430 and the capability information transmission step described above may be implemented by a device of FIG. 6. For example, a UE 200 may control one or more transceivers 230 and/or one or more memories 240 so as to perform the operations based on the steps S410 to S430 and the capability information transmission step.

Below, the above-described embodiments are described in detail from a perspective of base station operation.

Steps S510 and S520 and a capability information reception step described below correspond to the steps S410

to S430 and the capability information transmission step described with reference to FIG. 4. Considering the above correspondence, redundant description is omitted. That is, the detailed description of the base station operation described below can be replaced with the description/embodiment of FIG. 4 corresponding to the base station operation.

For example, the description/embodiment of the steps S410 to S430 of FIG. 4 may be additionally applied to the base station operation of the steps S510 and S520 described below.

For example, the description/embodiment of the capability information transmission step of FIG. 4 may be additionally applied to the base station operation of the capability information reception step described below.

FIG. 5 is a flow chart illustrating a method according to another embodiment of the present disclosure.

Referring to FIG. 5, a method according to another embodiment of the present disclosure comprises a step S510 of transmitting a LTM configuration, and a step S520 of transmitting a cell switch command MAC CE.

In the step S510, a base station transmits a L1/L2 Triggered Mobility (LTM) configuration (e.g., LTM-config) to a UE. The LTM configuration includes a configuration (e.g., LTM-Candidate) for each of candidate cells.

In the step S520, the base station transmits a cell switch command Medium Access Control-Control Element (MAC CE) related to a target cell among the candidate cells to the UE.

An LTM cell switch is performed based on a timing advance (TA) for the target cell.

According to an embodiment, based on a UE-based TA measurement being configured for the target cell, the TA may be acquired by measurement.

The measurement may be performed based on a specific downlink reference signal (DL RS) among DL RSs related to the target cell.

According to an embodiment, the method may further comprise transmitting capability information. Specifically, the base station receives capability information from the UE. The capability information may include information (e.g., rach-EarlyTA-Measurement-r18) that indicates a maximum number of candidate cells for TA acquisition before receiving the cell switch command MAC CE. The present embodiment may be based on the additional embodiment of the proposal 3.

The operations based on the steps S510 and S520 and the capability information reception step described above may be implemented by a device of FIG. 6. For example, a base station 100 may control one or more transceivers 130 and/or one or more memories 140 so as to perform the operations based on the steps S510 and S520 and the capability information reception step.

A device to which an embodiment of the present disclosure is applicable (a device implementing the metho-d/operation according to an embodiment of the present disclosure) is described below with reference to FIG. 6.

FIG. 6 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the

like. The processor 210 may control the overall operation of the second device 200 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

## Claims

**1.** A method comprising:

receiving a L1/L2 Triggered Mobility (LTM) configuration, wherein the LTM configuration includes a configuration for each of candidate cells;
receiving a Cell Switch Command Medium Access Control-Control Element (MAC CE) related to a target cell among the candidate cells; and
performing an LTM cell switch based on a Timing Advance (TA) for the target cell, wherein, based on UE-based TA measurement being configured for the target cell, the TA is acquired by measurement, and
wherein the measurement is performed based on a specific downlink reference signal (DL RS) among DL RSs related to the target cell.

**2.** The method of claim 1, wherein the specific DL RS is a Synchronization Signal Block (SSB) based on an SSB index.

**3.** The method of claim 2, wherein the SSB index is a highest SSB index or a lowest SSB index among SSB indexes based on the configuration for the target cell.

**4.** The method of claim 2, wherein the SSB index is an SSB index related to the target cell among SSB indexes in a resource set based on an LTM CSI report configuration.

**5.** The method of claim 2, wherein the SSB index is an SSB index of an SSB having a measurement value greater than or equal to a threshold among measured SSBs.

**6.** The method of claim 1, wherein the specific DL RS is based on a Transmission Configuration Indicator (TCI) state.

7. The method of claim 6, wherein the TCI state is a TCI state with a highest ID or a TCI state with a lowest ID among TCI states for which an SSB related to the target cell is configured as a reference RS.

8. The method of claim 6, wherein the TCI state is a TCI state activated for LTM among TCI states for which an SSB related to the target cell is configured as a reference RS.

9. The method of claim 6, wherein a time domain behavior related to the specific DL RS is set to periodic.

10. The method of claim 6, wherein the TCI state is a TCI state for which a DL RS having a measurement value greater than or equal to a threshold among measured DL RSs is configured as a reference RS.

11. The method of claim 6, wherein the specific DL RS is a reference RS related to Quasi Co-Location (QCL) type A among two reference RSs based on the TCI state.

12. The method of claim 1, wherein, based on the TA for the target cell, a random access procedure for the LTM cell switch is skipped.

13. The method of claim 1, further comprising:

transmitting capability information,
wherein the capability information includes information that indicates a maximum number of candidate cells for TA acquisition before receiving the Cell Switch Command MAC CE.

14. The method of claim 13, wherein, based on the number of candidate cells for which the UE-based TA measurement is configured among the candidate cells being greater than the maximum number:
TA measurement is performed for one or more candidate cells.

15. The method of claim 14, wherein the one or more candidate cells include a candidate cell determined based on i) the maximum number and ii) an order of an ID related to a candidate cell, among the candidate cells for which the UE-based TA measurement is configured.

16. The method of claim 14, wherein the one or more candidate cells include i) a candidate cell for which a TCI state is activated and/or ii) a candidate cell for which beam reporting is configured, among the candidate cells for which the UE-based TA measurement is configured.

17. A user equipment (UE) comprising:

one or more transceivers;
one or more processors; and
one or more memories connected to the one or more processors and storing instructions,
wherein the instructions, based on being executed by the one or more processors, cause the UE to perform all steps of the method according to any one of claims 1 to 16.

18. An apparatus comprising one or more memories and one or more processors operably connected to the one or more memories,
wherein the one or more memories store instructions that, based on being executed by the one or more processors, cause the apparatus to perform all steps of the method according to any one of claims 1 to 16.

19. One or more non-transitory computer-readable media storing instructions,
wherein the instructions executable by one or more processors cause a user equipment (UE) to perform all steps of the method according to any one of claims 1 to 16.

20. A method comprising:

transmitting a L1/L2 Triggered Mobility (LTM) configuration, wherein the LTM configuration includes a configuration for each of candidate cells; and
transmitting a Cell Switch Command Medium Access Control-Control Element (MAC CE) related to a target cell among the candidate cells,

wherein, based on a Timing Advance (TA) for the target cell, an LTM cell switch is performed, wherein, based on UE-based TA measurement being configured for the target cell, the TA is acquired by measurement, and wherein the measurement is performed based on a specific downlink reference signal (DL RS) among DL RSs related to the target cell.

**21.** A base station comprising:

one or more transceivers;
one or more processors; and
one or more memories connected to the one or more processors and storing instructions,
wherein the instructions, based on being executed by the one or more processors, cause the base station to perform all steps of the method according to claim 20.

R
Timing Advance Command
Oct 1
Timing Advance Command
UL Grant
Oct 2
UL Grant
Oct 3
UL Grant
Oct 4
UL Grant
Oct 5
Temporary C-RNTI
Oct 6
Temporary C-RNTI
Oct 7
TAG ID
Timing Advance Command
Oct 1

【FIG. 1】

【FIG. 2】

【FIG. 3】

UE
gNB
LTM preparation
UE in RRC_CONNECTED
1: Measurement report
LTM candidate preparation
2:RRC reconfiguration (LTM candidate cell configuration)
3: RRC reconfiguration complete
Early sync
4a: DL synchronization with candidate cells
4b: UL synchronization with candidate cells
LTM cell switch execution
5: L1 measurement report
LTM decision
6: Cell switch command(MAC CE)
Detach from source, apply target configurations
7: RACH Procedure
LTM cell switch completion
8: LTM cell switch completion

【FIG. 4】

Start
Receive LTM configuration
S410
Receive Cell Switch Command MAC CE
S420
Perform LTM cell switch
S430
End

【FIG. 5】

Start
Transmit LTM configuration
S510
Transmit Cell Switch Command MAC CE
S520
End

【FIG. 6】

100
Processor
(110)
Higher
Layer
Processing
Unit
(111)
Physical
Layer
Processing
Unit
(115)
Antenna
Unit
(120)
Transceiver
(130)
Memory
(140)
200
Antenna
Unit
(220)
Transceiver
(230)
Memory
(240)
Processor
(210)
Higher
Layer
Processing
Unit
(211)
Physical
Layer
Processing
Unit
(215)

# INTERNATIONAL SEARCH REPORT

International application No.
**PCT/KR2024/017081**

**A. CLASSIFICATION OF SUBJECT MATTER**

**H04W 36/00**(2009.01)i; **H04W 36/08**(2009.01)i; **H04W 56/00**(2009.01)i; **H04W 72/23**(2023.01)i

According to International Patent Classification (IPC) or to both national classification and IPC

**B. FIELDS SEARCHED**

Minimum documentation searched (classification system followed by classification symbols)

H04W 36/00(2009.01); H04W 56/00(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: L1/L2-triggerd mobility (LTM) configuration, candidate cells, cell switch command MAC CE, UE-based TA measurement, DL RS

**C. DOCUMENTS CONSIDERED TO BE RELEVANT**

| Category* | Citation of document, with indication, where appropriate, of the relevant passages | Relevant to claim No. |
|---|---|---|
| | MEDIATEK INC. et al. 38.300 running CR for introduction of NR further mobility enhancements. R2-2311610, 3GPP TSG-RAN WG2 Meeting #123bis. Xiamen, China. 23 October 2023. | |
| Y | See sections 9.2.3.x-9.2.3.x.2; and figure x. | 1-2,6,8,12,17-21 |
| A | | 3-5,7,9-11,13-16 |
| | QUALCOMM INCORPORATED. TA management to reduce latency for L1/L2 based mobility. R1-2310150, 3GPP TSG RAN WG1 Meeting #114-bis. Xiamen, China. 29 September 2023. | |
| Y | See section 3. | 1-2,6,8,12,17-21 |
| | NOKIA et al. Remaining Issues on Timing Advance Management for L1/L2-triggered Mobility. R1-2309734, 3GPP TSG RAN WG1 Meeting #114-bis. Xiamen, China. 29 September 2023. | |
| Y | See sections 2.2-2.2.1. | 6,8 |
| | SAMSUNG. Support of UE-based TA acquisition for LTM. R2-2309851, 3GPP TSG-RAN WG2 Meeting #123bis. Xiamen, China. 17 October 2023. | |
| A | See sections 2-2.2. | 1-21 |
| | US 2021-0195547 A1 (QUALCOMM INCORPORATED) 24 June 2021 (2021-06-24) | |
| A | See paragraphs [0064]-[0069]; and figures 5-6. | 1-21 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **19 February 2025** | **19 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/017081**

| Patent document cited in search report | Publication date (day/month/year) | Patent family member(s) | Publication date (day/month/year) |
|---|---|---|---|
| US 2021-0195547 A1 | 24 June 2021 | CN 114830753 A | 29 July 2022 |
| | | CN 114830753 B | 17 September 2024 |
| | | EP 4082261 A1 | 02 November 2022 |
| | | WO 2021-133879 A1 | 01 July 2021 |

Form PCT/ISA/210 (patent family annex) (July 2022)